# EUROPÄISCHE PATENTSCHRIFT

(11) **EP 4 088 053 B1**
(45) Veröffentlichungstag und Bekanntmachung des Hinweises auf die Patenterteilung: **23.08.2023**
(21) Anmeldenummer: 21722831.1
(22) Anmeldetag: 29.04.2021
(51) Int. Cl.: F04B 43/00, F04B 43/02, F16K 15/14, F04B 53/10

(54) **VENTIL SOWIE MEMBRANPUMPE MIT EIN- UND AUSLASSVENTILEN**
VALVE AND DIAPHRAGM PUMP WITH INLET AND OUTLET VALVES
SOUPAPE ET POMPE À MEMBRANE AYANT DES SOUPAPES D'ENTRÉE ET DE SORTIE

(30) Priorität: 11.05.2020 DE 102020112696
(43) Veröffentlichungstag der Anmeldung: 16.11.2022
(73) Patentinhaber: KNF FLODOS AG, 6210 Sursee (CH)
(72) Erfinder: KAUFMANN, Stephan, 6222 Gunzwil (CH); BUCHER, Michael, 6262 Langnau b. Reiden (CH); WÜTHRICH, Andreas, 4800 Zofingen (CH)
(74) Vertreter: Mertzlufft-Paufler, Cornelius
(86) Internationale Anmeldenummer: PCT/EP2021/061254
(87) Internationale Veröffentlichungsnummer: WO 2021/228567

(56) Entgegenhaltungen:
- EP-A2- 2 849 812
- DE-A1-102005 005 473
- DE-A1-102016 002 071
- DE-U1-202004 009 673
- US-A- 3 039 487

## Beschreibung

Die Erfindung betrifft ein Ventil gemäß Anspruch 1.

Die Erfindung befasst sich auch mit einer Membranpumpe, mit wenigstens einem Einlass- und mindestens einem Auslassventil. Aus der EP 1 555 469 A1 kennt man bereits ein Ventil der eingangs erwähnten Art, das einen, von einem Ventilgehäuse umgrenzten Ventilraum hat, in dem wenigstens ein Ventilsitz vorgesehen ist. Der Ventilsitz, der eine Ventilöffnung umgrenzt, wirkt mit einer Ventilplatte aus elastischem Material zusammen. Diese Ventilplatte ist im Ventilgehäuse über äußere Randhalterungen gehalten und derart auf Zug vorgespannt, dass ein plattenförmiger Schließkörper der Ventilplatte in Schließstellung des Ventils dicht auf dem Ventilsitz aufliegt und durch eine Druckdifferenz gegen die Elastizität der Ventilplatte zumindest im Bereich ihrer äußeren Randhalterungen in eine Offenstellung des Ventils bewegt werden kann, in welcher Offenstellung der Schließkörper vom Ventilsitz abgehoben ist. Dabei weist jede der äußeren Randhalterungen der Ventilplatte jeweils Querstege auf, der an seinem den Schließkörper abgewandten Stegende mit einem ankerförmigen Quersteg verbunden ist. Diese Querstege sind im Ventilgehäuse in entsprechenden Ausnehmungen eingespannt.

Bei diesem sogenannten Ankerventil gemäß der EP 1 555 469 A1 hat die Ventilplatte zwar keine zusätzliche Dichtfunktion zwischen den das Ventilgehäuse und den darin vorgesehenen Ventilraum umgrenzenden Gehäuseteilen zu übernehmen und die Funktion der Ventilplatte beeinträchtigende Quetschungen in den Dichtbereichen werden vermieden. Da das für die Ventilplatte verwendete elastische Material gegenüber dem Fördermedium nicht immer chemisch beständig ist und geringfügig aufquellen kann, muss um die Ventilplatte im Ventilraum ein Freiraum sein, weil die Ventilplatte andernfalls bei einer Quellung verbiegen und seine Funktion beeinträchtigt sein könnte. Durch diesen Freiraum kann das vorbekannte Ankerventil aber seine formschlüssige Positionierung verlieren und die Lage der Ventilplatte und ihres Schließkörpers über dem Ventilsitz ist nicht mehr eindeutig definiert.

Aus der US 3 039 487 A ist ein Auslassventil bekannt, das Verwendung in einem Kältemittelkompressor findet.

Das plattenförmige Ventilsegment gemäß DE 10 2016 002 071 A1 ist für ein Ventil, beispielsweise für Membranpumpen, geeignet und hat einen zentralen Schließkörper zur Beaufschlagung eines Ventilsitzes, mit einem Segmentrand zur Randeinspannung des Ventilsegmentes zwischen zwei Gehäuseteilen, insbesondere zwischen zwei Kopfplatten eines Pumpenkopfes der Membranpumpe, und mit mehreren jeweils mit dem Schließkörper und dem Segmentrand verbundenen Segmentstegen, wobei wenigstens zwei nebeneinanderliegend angeordnete Segmentstege ausgehend von dem Schließkörper zumindest abschnittsweise gegenläufig gebogen und/oder gegenläufig abgewinkelt sind.

Um den Ventilsitz in Schließstellung des Ankerventils dicht zu verschließen, steht der Ventilsitz häufig über die angrenzende Ebene des Ventilgehäuses vor. Je stärker dieser Überstand Toleranzen unterliegt, desto weniger dicht liegt die Ventilplatte und ihr Schließkörper, insbesondere bei Stillstand des Ventils, am Ventilsitz an. Für ein perfektes Schließverhalten sind somit sehr geringe Fertigungstoleranzen notwendig, die jedoch insbesondere bei Kleinstpumpen nur mit hohem Aufwand zu erreichen sind. Schließlich lassen sich diese vorbekannten Ankerventile nur schwer in einem automatisierten Herstellungsverfahren in das Ventilgehäuse, insbesondere bei Kleinstpumpen, montieren.

Aus der EP 0 336 307 A2 ist bereits ein Rückschlagventil vorbekannt, dessen Ventilplatte außenumfangsseitig eine Ringdichtung aufweist, die über mehrere Stege mit einem zentralen Schließkörper im Inneren der Ventilplatte verbunden ist. Damit der Schließkörper selbst dann die Ventilbewegungen gegenüber der im Ventilgehäuse eingespannten Ringdichtung durchführen kann, wenn die Ventilplatte aus einem hartelastischen oder vergleichsweise starren Material hergestellt ist, sind die Stege quer zu einer radialen Erstreckung zwischen außenliegendem Dichtring und innenliegendem Schließkörper angeordnet, derart, dass sich der Schließkörper während einer Ventilbewegung gegenüber dem Dichtring geringfügig verdrehen und gleichzeitig öffnen oder schließen kann. Da bei diesem vorbekannten Plattenventil der Dichtring der Ventilplatte aber im Ventilgehäuse eingespannt ist, lassen sich funktionsbeeinträchtigende Quetschungen der Ventilplatte häufig nicht vermeiden.

Aus EP 2 849 812 A2 ist eine Pumpenbaugruppe bekannt, die eine Schwingspule, einen Magneten und eine Membran umfasst. Dabei ist die Schwingspule so konfiguriert, dass sie die Membran bewegt, um als Reaktion auf ein an die Schwingspule angelegtes Antriebssignal ein Fluid durch die Pumpenbaugruppe zu pumpen.

Es besteht daher die Aufgabe, ein Ventil der eingangs erwähnten Art zu schaffen, das sich selbst bei einer automatisierten Fertigung leicht im Ventilgehäuse montieren lässt und das sich durch eine verbesserte Funktionalität auszeichnet. Darüber hinaus besteht auch die Aufgabe, eine Membranpumpe mit einem solchen, als Einlass- und/oder als Auslassventil ausgebildeten Ventil zu schaffen.

Die erfindungsgemäße Lösung dieser Aufgabe besteht bei dem Ventil der eingangs erwähnten Art insbesondere darin, dass die äußeren Randhalterungen untereinander unverbunden nur an dem Schließkörper angreifen, dass jede äußere Randhalterung zumindest zwei Stege aufweist, dass die Stege einer jeden Randhalterung über einen Verbindungsbügel miteinander verbunden sind, und dass jeder Verbindungsbügel wenigstens eine zugeordnete Haltebasis des Ventilgehäuses hintergreift.

Auch das erfindungsgemäße Ventil weist einen, von einem Ventilgehäuse umgrenzenden Ventilraum auf, in dem wenigstens ein Ventilsitz vorgesehen ist. Der Ventilsitz wirkt mit einer Ventilplatte zusammen, die über äußere Randhalterungen derart elastisch auf Zug vorgespannt ist, dass ein vorzugsweise plattenförmiger Schließkörper der Ventilplatte in einer Schließstellung des Ventils dicht auf dem Ventilsitz aufliegt, um von dort durch eine positive Druckdifferenz gegen die Eigenelastizität des für die Ventilplatte verwendeten Materials zumindest im Bereich der äußeren Randhalterungen in eine Offenstellung bewegt zu werden. Dabei weisen die äußeren Randhalterungen der Ventilplatte Stege auf und haben Verbindungsbügel, die mit den dem Schließkörper abgewandten Stegenden der Stege verbunden sind. Erfindungsgemäß greifen die äußeren Randhalterungen der Ventilplatte untereinander unverbunden nur an dem Schließkörper der Ventilplatte an, wobei jede äußere Randhalterung dazu zumindest zwei Stege aufweist. Dabei sind die Stege einer jeden Randhalterung über einen gemeinsamen Verbindungsbügel miteinander verbunden, wobei jeder der Verbindungsbügel wenigstens eine zugeordnete Haltebasis des Ventilgehäuses hintergreift. Da jeder dieser Verbindungsbügel wenigstens eine zugeordnete Haltebasis des Ventilgehäuses hintergreift, ist eine eventuell funktionsbeeinträchtigende Quetschung der Ventilplatte zumindest im Bereich ihrer Verbindungsbügel nicht notwendig. Da die Ventilplatte durch die jeweils zumindest eine Haltebasis des Ventilgehäuses hintergreifenden Verbindungsbügel positionsgerecht im Ventilgehäuse gehalten ist, lässt sich die Ventilplatte auch in einem automatisierten Herstellungsverfahren auf einfache Weise montieren. Dabei kann der Schließkörper der Ventilplatte bei einer positiven Druckdifferenz leicht vom Ventilsitz abgehoben werden, wobei um den Schließkörper herum nur ein geringer Umströmungsquerschnitt durch die Stege blockiert ist, während die Ventilplatte bei einer negativen Druckdifferenz mit ihrem Schließkörper dicht auf dem Ventilsitz aufliegt und diesen zuverlässig verschließt. Dabei wird für die äußeren Randhalterungen der Ventilplatte nur ein vergleichsweise geringer (Tot-)Raum im Ventilgehäuse verwendet.

Bei dem erfindungsgemäßen Ventil weisen die äußeren Randhalterungen nicht ein gemeinsames umlaufendes und eventuell auch zur Abdichtung dienendes Verbindungselement auf, das über die in Umfangsrichtung voneinander beabstandeten Stege mit einem zentralen Schließkörper verbunden wäre. Vielmehr sieht eine bevorzugte Weiterbildung gemäß der Erfindung demgegenüber vor, dass die Verbindungsbügel der äußeren Randhalterungen getrennt voneinander über die ihnen jeweils zugeordneten Stege mit dem Schließkörper verbunden sind. Da die Verbindungsbügel der äußeren Randhalterungen getrennt voneinander über die ihnen jeweils zugeordneten Stege mit dem Schließkörper verbunden sind und da somit definierte Zugkräfte auf den Schließkörper einwirken, wird eine positionsgerechte Anordnung des Schließkörpers in Schließstellung des Ventils begünstigt.

Die lagegerechte Position des Schließkörpers in Schließstellung des Ventils und ein definiertes Aufbringen der über die Stege der äußeren Randhalterungen auf den Schließkörper einwirkenden Zugkräfte wird begünstigt, wenn jede Randhalterung eine Zentriergeometrie aufweist, die mit einer vorzugsweise komplementären Gegengeometrie der wenigstens einen zugeordneten Haltebasis zusammenwirkt.

Möglich ist, dass der Verbindungsbügel zumindest einer der äußeren Randhalterungen über mehr als zwei Stege mit dem zentralen Schließkörper verbunden ist.

Eine konstruktiv einfache und mit vergleichsweise geringem Aufwand herstellbare Ausführung gemäß der Erfindung sieht demgegenüber aber auch vor, dass jede Randhalterung ein Paar von Stegen aufweist, die an ihren dem Schließkörper abgewandten Enden über einen gemeinsamen Verbindungsbügel miteinander verbunden sind.

Bevorzugte Ausführungen gemäß der Erfindung sehen vor, dass der Verbindungsbügel einer jeden Randhalterung mindestens eine zentrierende oder positionierende Aus- und/oder Einformung aufweist, die mit einer komplementären Gegenprofilierung an der wenigstens einen zugeordneten Haltebasis zusammenwirkt.

So können die Verbindungsbügel der äußeren Randhalterungen beispielsweise auf ihrer der Haltebasis zugewandten Innenseite mindestens eine Ausformung aufweisen, die beispielsweise als konvexe Zentriergeometrie ausgebildet und zum seitlichen Positionieren der Ventilplatte in einer vorzugsweise komplementär ausgestalteten Einformung auf der benachbarten Seite der Haltebasis aufgenommen ist.

Ein anderes Ausführungsbeispiel sieht stattdessen vor, dass die Verbindungsbügel der äußeren Randhalterungen auf ihrer der Haltebasis zugewandten Innenseite mindestens eine Einformung haben, die beispielsweise als konkave Zentriergeometrie ausgebildet und zur seitlichen Positionierung der Ventilplatte in einer vorzugsweise komplementär ausgestalteten Ausformung auf der benachbarten Seite der Haltebasis zusammenwirkt. Möglich ist auch, dass der Verbindungbügel auf seiner der Haltebasis zugewandten Seite eine Zentriergeometrie hat, die mindestens eine Ausformung und wenigstens eine Einformung aufweist und die mit einer vorzugsweise komplementären Gegengeometrie am benachbarten Umfangsteilbereich der zugeordneten Haltebasis zusammenwirkt.

Damit die Zentriergeometrie an den Randhalterungen einerseits und die vorzugsweise komplementär ausgebildete Gegengeometrie an den jeweils zugeordneten Haltebasen andererseits über die Ventilbewegungen und -positionen hinweg stets sicher und positionierend ineinandergreifen, ist es vorteilhaft, wenn die Zentriergeometrie jeweils mit dem nicht aus der Ebene bewegten Bereich der randseitigen Halterungen und somit vorzugsweise im Bereich der Verbindungsbügel angeordnet ist.

Ist die an den äußeren Randhalterungen vorgesehene Zentriergeometrie als Ausformung ausgebildet, kann es vorteilhaft sein, wenn der Verbindungsbügel einer jeden Randhalterung eine etwa mittig angeordnete und vorzugsweise etwa nockenförmig ausgebildete Ausformung hat, wodurch sich eine positionsgenaue Anordnung der Ventilplatte über der Ventilöffnung und des Schließkörpers über dem Ventilsitz sicherstellen lässt.

Damit die Stege der Randhalterungen in Offenstellung des Ventils einen möglichst geringen Umströmungsquerschnitt erzeugen, ist es vorteilhaft, wenn die Stege der auf gegenüberliegenden Seiten der Ventilplatte angeordneten Randhalterungen paarweise in etwa einer Linie angeordnet sind, die vorzugsweise etwa tangential zum Schließkörper verläuft. Damit ist gleichzeitig sichergestellt, dass die Zugrichtung der Stege jeweils zumindest überwiegend tangential und somit keinesfalls radial an dem zentralen Schließkörper angreift.

Damit sich der Verbindungsbügel einer jeden Randhalterung sicher und positionierend an die benachbarte Außenumfangsseite der zugeordneten Haltebasis anlegen kann, ist es vorteilhaft, wenn zumindest eine Haltebasis in ihrem vom zugeordneten Verbindungsbügel beaufschlagten Umfangsbereich insbesondere konvex gebogen oder gerundet ausgebildet ist.

Eine manuelle und eine gegebenenfalls auch automatisierte Montage des erfindungsgemäßen Ventils wird zusätzlich erleichtert, wenn das Ventilgehäuse zwischen aneinander anliegenden Gehäuseteilen umgrenzt ist.

Zur automatisierten Montage des Ventils beim Zusammenfügen der das Ventilgehäuse bildenden Ventilgehäuseteile ist es vorteilhaft, wenn zumindest eine der äußeren Randhalterungen in dem die Ventilplatte aufnehmenden Ventilgehäuseteil über Formschrägen und/oder Einführschrägen verfügt, welche beim Zusammenbau der Ventilgehäuseteile eine elastische Vorspannung der Ventilplatte in der Ebene des aufnehmenden Ventilgehäuseteiles bewirken. Dabei wird eine Ausführung bevorzugt, bei der die zur Aufnahme der Ventilplatte vorgesehene Aufnahmegeometrie der aneinander anliegenden Ventilgehäuseteile Einführschrägen aufweist, die beim Einfügen der Ventilgehäuseteile aneinander die Ventilplatte in eine an ihren Randhalterungen vorgespannte Gebrauchsstellung zwischen den Ventilgehäuseteilen bringt. Eine dichte Anlage des an der Ventilplatte vorgesehenen Schließkörpers am Ventilsitz wird begünstigt, wenn der Ventilsitz über die durch die randseitigen Halterungen der Ventilplatte gebildete Ebene vorsteht.

Um auch bei geringer Kraft eine hohe Beweglichkeit und einen langen Hubweg der Stege einer jeden Randhalterung zu begünstigen, ist es vorteilhaft, wenn die aus den Stegen und den sie verbindenden Verbindungsbügel gebildete Bügelform durch Biegung nach außen vorgespannt ist. Erfindungsgemäß ist vorgesehen, dass die Verbindungsbügel über ihre zugeordnete Haltebasis beidseits seitlich vorstehen, derart, dass die mit den Stegen verbundenen Verbindungsbügel durch Biegung nach außen vorgespannt sind.

Die sichere Anordnung der Ventilplatte in montiertem Zustand des Ventils wird begünstigt, wenn die Stege und der Verbindungsbügel einer jeden Randhalterung derart gestaltet sind, dass die Deformation der Vorspannung größtenteils, zumindest mehr als die Hälfte, in dem Verbindungsbügel (Biegung) einer jeden Randhalterung und weniger in den Stegen (Zugdehnung) erfolgt. Dazu ist es zweckmäßig, wenn jeder Verbindungsbügel derart ausgestaltet ist, dass die vorspannungsbedingte Deformation der randseitigen Halterungen im Bereich ihrer Verbindungsbügel größer ist als im Bereich der Stege.

Um die Ventilbewegung vor allem in den Verbindungsbügeln der Randhalterungen auszugleichen und um dabei weniger die Elastizität der Ventilplatte im Bereich der Stege zu nutzen, ist es vorteilhaft, wenn die Stege und der Verbindungsbügel der Randhalterungen derart gestaltet sind, dass die Verlängerung des Abstands zwischen den auf gegenüberliegenden Seiten der Ventilplatte angeordneten Ausformungen in Offenstellung des Ventils im Vergleich zur Schließstellung mehr als die Hälfte durch eine zusätzliche Biegung der Verbindungsbügel kompensiert ist.

Um einem unbeabsichtigten Ablösen der Ventilplatte von den beidseits angeordneten Haltebasen des Ventilgehäuses während der Montage des Ventils entgegenzuwirken, ist es vorteilhaft, wenn jede Haltebasis gegenüber der angrenzenden Ebene des Ventilgehäuses eine Höhe aufweist, die größer ist als die Dicke der Ventilplatte.

Damit selbst bei einer Quellung der Ventilplatte insbesondere unter der Einwirkung des Fördermediums und einer dadurch bedingten Ausdehnung der Ventilplatte in alle drei Dimensionen immer noch eine Zugspannung auf die äußeren Randhalterungen einwirkt, ist es vorteilhaft, wenn die Ventilplatte zwischen den beidseits des Ventilsitzes angeordneten Haltebasen derart mit Vorspannung gehalten ist, dass auf die Stege der randseitigen Halterungen selbst bei einer Quellung des für die Ventilplatte verwendeten Materials eine Zugspannung einwirkt.

Damit der Schließkörper der Ventilplatte in Schließstellung des Ventils über den gesamten Umfang des Ventilsitzes an diesem dicht anliegt, ist es vorteilhaft, wenn der Ventilsitz über die angrenzende Ebene des Ventilgehäuses vorsteht.

Auch bei hohen positiven Differenzdrücken wird die Funktionalität des Ventils stets gewährleistet, wenn auf der der dem Ventilsitz abgewandten Seite des Ventilgehäuses wenigstens ein Hubfänger vorgesehen ist, der über die angrenzende Ebene des Ventilgehäuses vorsteht und die maximale Auslenkung des Schließkörpers in Offenstellung des Ventils begrenzt.

Um einer übermäßigen Krümmung der Ventilplatte im Bereich ihres Schließkörpers in der Offenstellung des Ventils entgegenzuwirken, ist es vorteilhaft, wenn die Anbindung der Stege an den zentralen Schließkörper gleich breit oder schmaler als die Stege ist. Dazu sehen bevorzugte Ausführungen gemäß der Erfindung vor, dass die Stege im Bereich zwischen dem Verbindungsbügel einerseits und ihrer Anbindung an den Schließkörper andererseits einen gleichbleibenden Querschnitt aufweisen oder dass die Stege im Bereich ihrer Anbindung an den Schließkörper eine Querschnittsschwächung oder -verengung haben.

Die Ventilplatte des erfindungsgemäßen Ventils ist nicht dazu vorgesehen und nicht dazu ausgebildet, auch zwischen den den Ventilraum umgrenzenden Ventilgehäuseteilen abzudichten. Es ist daher vorteilhaft, wenn die Ventilplatte außenumfangsseitig zumindest im Bereich der Verbindungsbügel und insbesondere allseits über den gesamten Außenumfang vom Ventilgehäuse beabstandet ist und/oder wenn zwischen den das Ventilgehäuse umgrenzenden Ventilgehäuseteilen wenigstens eine, mit Abstand um die Ventilplatte umlaufende und von der Ventilplatte insbesondere separate Ringdichtung vorgesehen ist.

Die erfindungsgemäße Lösung der eingangs gestellten Aufgabe sieht bei der Membranpumpe der eingangs erwähnten Art vor, dass zumindest ein Einlass- und/oder Auslassventil gemäß einem der Ansprüche 1 bis 15 ausgebildet ist. Weiterbildungen gemäß der Erfindung ergeben sich aus den Ansprüchen sowie der Beschreibung in Verbindung mit der Zeichnung. Nachstehend wird die Erfindung anhand bevorzugter Ausführungsbeispiele noch näher beschrieben.

Es zeigt:
- Fig. 1: eine Ventilplatte mit einem zentralen und in Draufsicht kreisrunden Schließkörper, der auf gegenüberliegenden Seiten angeordnete, äußere Randhalterungen hat, die jeweils ein Paar voneinander beabstandeter Stege aufweisen, welche an ihren dem Schließkörper abgewandten Stegenden jeweils über einen Verbindungsbügel miteinander verbunden sind, wobei die äußeren Randhalterungen mit Zugspannung jeweils derart an einer zugeordneten Haltebasis angreifen, dass der Schließkörper positionsgerecht über einem Ventilsitz gehalten ist,
- Fig. 2: das hier als Einlassventil einer Membranpumpe ausgebildete Ventil aus Figur 1 in einem Längsschnitt durch das Ventilgehäuse, wobei die Ventilplatte des Ventils in einem zwischen zwei aneinander anliegenden Ventilgehäuseteilen umgrenzten Ventilraum gehalten ist,
- Fig. 3: das hier als Auslassventil einer Membranpumpe ausgebildete Ventil aus Figur 1 in einem Längsschnitt durch das Ventilgehäuse, wobei auch hier das Auslassventil zwischen zwei aneinander anliegenden Ventilgehäuseteilen umgrenzten Ventilraum gehalten ist und wobei die zur Aufnahme der Ventilplatte vorgesehene Gehäusegeometrie in den Figuren 2 und 3 jeweils in dem untenliegenden, als Basis dienenden Ventilgehäuseteil angeordnet ist,
- Fig. 4: das Einlassventil aus Figur 2 während der Montage des Ventils, und zwar vor dem Ineinanderfügen der in montiertem Zustand aneinander anliegenden Ventilgehäuseteile,
- Fig. 5: das Auslassventil aus Figur 3 während der Montage des Ventils in einem Längsschnitt, und zwar vor dem Ineinanderfügen der in montiertem Zustand aneinander anliegenden Ventilgehäuseteile,
- Fig. 6: eine wie in Figur 1 ausgebildete Ventilplatte in einer Detaildarstellung im Bereich der Anbindung zwischen einer ihrer äußeren Randhalterungen und dem zentralen Schließkörper,
- Fig. 7: eine wie in Figur 1 ausgebildete Ventilplatte in einer Detaildarstellung, die an dem Verbindungsbügel eine zentrierende oder positionierende Einformung aufweist, die mit einer Ausformung an der zugeordneten Haltebasis zusammenwirkt,
- Fig. 8: eine mit Figur 1 vergleichbare Ventilplatte in einer Detaildarstellung im Bereich einer ihrer äußeren Randhalterungen, wobei an dem zur Anlage an einer Haltebasis bestimmten Umfangsteilbereich des Verbindungsbügels eine aus zwei nockenförmigen Ausformungen gebildete Zentriergeometrie vorgesehen ist, welche Ausformungen durch eine ebenfalls nockenförmige Einformung voneinander beabstandet sind,
- Fig. 9: eine mit Figur 1 vergleichbar ausgestaltete Ventilplatte in einer Detaildarstellung im Bereich einer ihrer äußeren Randhalterungen, wobei der Verbindungsbügel hier eine pfeilspitzenförmig ausgebildete und etwa in der Mitte des Verbindungsbügels angeordnete Zentriergeometrie aufweist, und
- Fig. 10: eine Ventilplatte, die drei äußere, jeweils mit einer Haltebasis am Ventilgehäuse zusammenwirkende Randhalterungen hat, welche Randhalterungen in gleichmäßigen Abständen über den Umfang der Ventilplatte angeordnet sind und an einem zentralen Schließkörper angreifen.

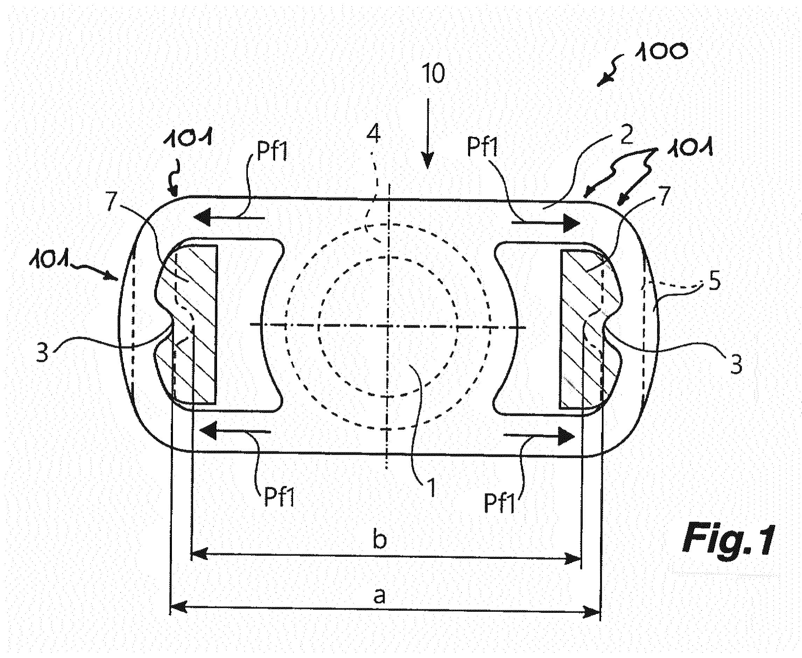

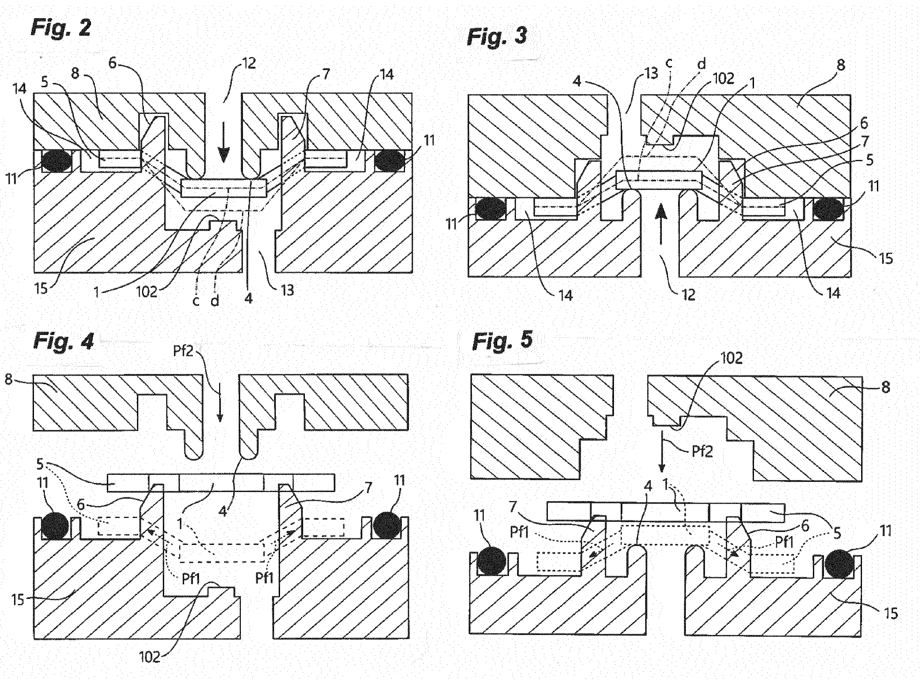

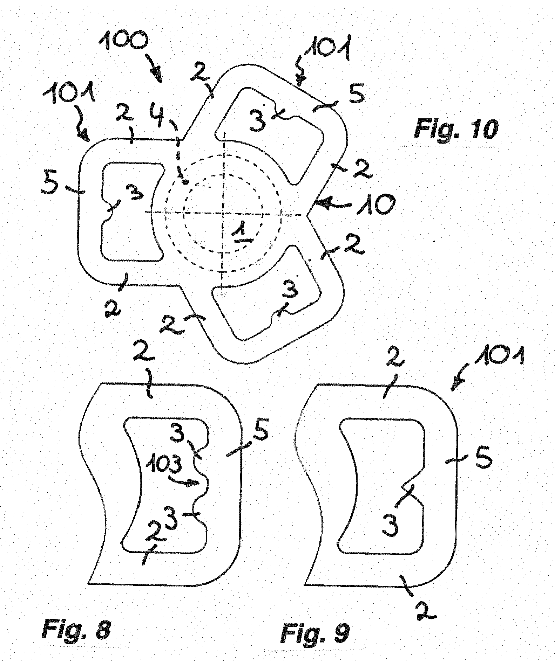

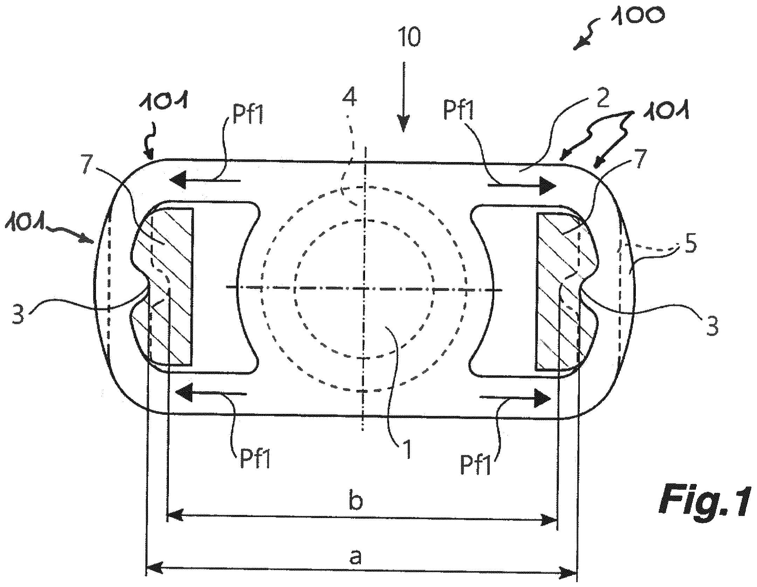

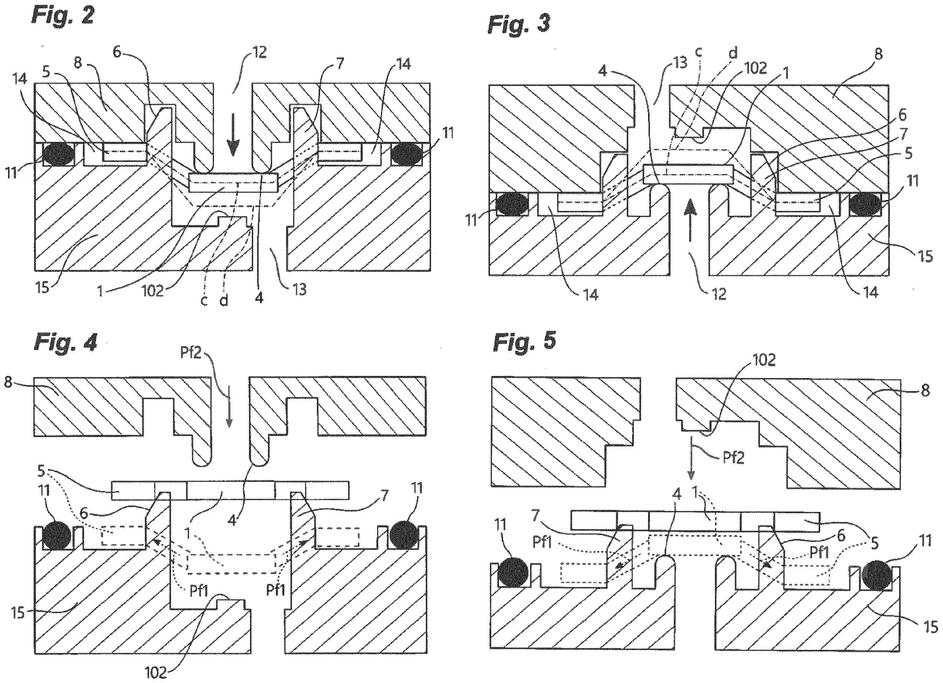

In den Figuren 1 und 10 sind zwei Ausführungen eines Ventils 100 dargestellt, das als Plattenventil ausgebildet und als Einlass- oder Auslassventil einer Membranpumpe oder als druckgesteuertes Rückschlagventil verwendbar ist. Das Ventil 100 weist einen in den Figuren 2 und 3 näher dargestellten Ventilraum 14 auf, in dem ein Ventilsitz 4 vorgesehen ist. Der Ventilsitz 4 wirkt mit einer Ventilplatte 10 zusammen, die über äußere Randhalterungen 101 elastisch auf Zug derart vorgespannt ist, dass ein hier plattenförmiger zentraler Schließkörper 1 dicht auf dem Ventilsitz 4 aufliegt und gegen die Elastizität des für die Ventilplatte 10 verwendeten Materials - zumindest im Bereich ihrer äußeren Randhalterungen 101 - in eine Offenstellung bewegbar ist.

In der Draufsicht gemäß Figur 1 ist erkennbar, dass die äußeren Randhalterungen 101 auf gegenüberliegenden Seiten des Ventilsitzes 4 an der Ventilplatte 10 vorgesehen sein können. Demgegenüber weist die Ventilplatte 10 gemäß Figur 10 drei äußere Randhalterungen 101 auf, die gleichmäßig über den Umfang des Schließkörpers 1 verteilt angeordnet sind. Die äußeren Randhalterungen 101 greifen untereinander unverbunden nur an dem Schließkörper 1 an. Jede äußere Randhalterung 101 der in den Figuren 1 und 10 gezeigten Ventilplatten weist zumindest zwei Stege 2 auf. Dabei sind die Stege einer jeden äußeren Randhalterung 101 an ihren, dem Schließkörper 1 abgewandten Stegenden über einen Verbindungsbügel 5 dieser Randhalterung 101 miteinander verbunden. Jeder der Verbindungsbügel 5 hintergreift wenigstens eine zugeordnete Haltebasis 7 des Ventilgehäuses. In Figur 1 ist erkennbar, dass jeder der Verbindungsbügel 5 wenigstens eine zugeordnete Haltebasis 7 des Ventilgehäuses hintergreift, und dass jede Randhalterung 101 ein Paar von Stegen 2 aufweist, die an ihren dem Schließkörper 1 abgewandten Enden über einen gemeinsamen Verbindungsbügel 5 miteinander verbunden sind.

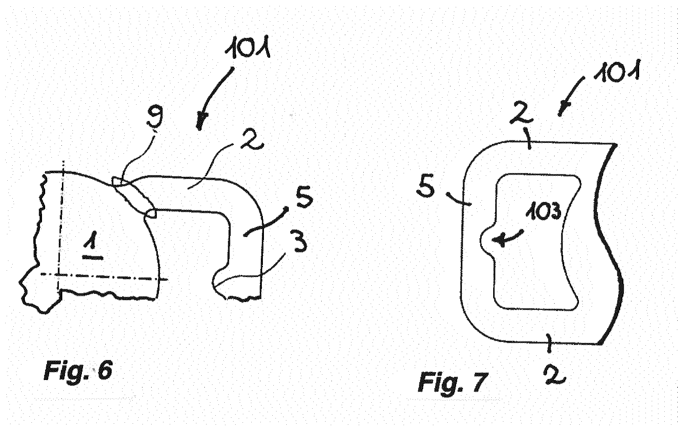

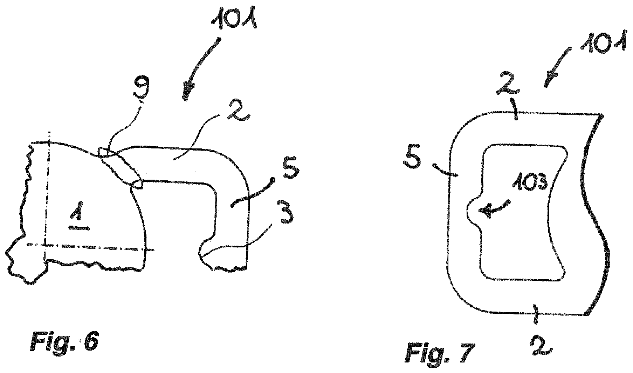

Die Verbindungsbügel 5 der äußeren Randhalterungen 101 sind getrennt voneinander über die ihnen jeweils zugeordneten Stege 2 mit dem Schließkörper 1 verbunden. In Figur 1 ist erkennbar, dass jede Randhalterung 101 eine Zentriergeometrie aufweist, die mit einer vorzugsweise komplementären Gegengeometrie der wenigstens einen zugeordneten Haltebasis 7 zusammenwirkt. In dem Ausführungsbeispiel gemäß Figur 1 weist der Verbindungsbügel 5 einer jeden Randhalterung 101 mindestens eine zentrierende oder positionierende Aus- oder Einformung auf, die mit einer komplementären Gegenprofilierung an der wenigstens einen zugeordneten Haltebasis 7 zusammenwirkt, wobei der Verbindungsbügel 5 einer jeden Randhalterung 101 eine etwa mittig angeordnete und vorzugsweise etwa nockenförmig ausgebildete Ausformung 3 hat. Aus einem Vergleich der in Figur 7, 8 und 9 gezeigten Detaildarstellungen wird deutlich, dass der Verbindungsbügel 5 einer jeden Randhalterung 101 mindestens eine zentrierende oder positionierende Aus- oder Einformung 3, 103 aufweist, die mit einer komplementären Gegenprofilierung an der wenigstens einen zugeordneten Haltebasis 7 zusammenwirkt.

Wie in Figur 7 gezeigt ist, kann der Verbindungsbügel 5 einer jeden Randhalterung 101 mindestens eine zentrierende oder positionierende Aus- oder Einformung aufweisen, die mit einer komplementären Gegenprofilierung an der wenigstens einen zugeordneten Haltebasis 7 zusammenwirkt.

In Figur 1 ist erkennbar, dass die Stege 2 der auf gegenüberliegenden Seiten der Ventilplatte 10 angeordneten Randhalterungen 101 paarweise in etwa einer Linie angeordnet sind, die vorzugsweise etwa tangential zum Schließkörper 1 verläuft. Die die Stege 2 miteinander verbindenden Verbindungsbügel 5 einer jeden Randhalterung 101 liegen jeweils am benachbarten Umfangsteilbereich der dieser Randhalterung zugeordneten Haltebasis 7 an, wobei die zumindest eine Haltebasis 7 in ihrem vom zugeordneten Verbindungsbügel 5 beaufschlagten Umfangsbereich insbesondere konvex gebogen oder gerundet ausgebildet ist. Die die Stege 2 miteinander verbindende Verbindungsbügel 5 einer jeden Randhalterung 101 liegen jeweils am benachbarten Umfangsteilbereich der dieser Randhalterung 101 zugeordneten Haltebasis 7 an, wobei die zumindest eine Haltebasis 7 in ihrem vom zugeordneten Verbindungsbügel 5 beaufschlagten Umfangsbereich insbesondere konvex gebogen oder gerundet ausgebildet ist.

Aus den Figuren 2 bis 5 wird deutlich, dass der Ventilraum 14 zwischen einander anliegenden Ventilgehäuseteilen 8, 15 umgrenzt ist, welche das Ventilgehäuse bilden. Das Ventilgehäuse kann auch integraler Bestandteil des Pumpenkopfes einer Membranpumpe sein.

Der Ventilsitz 4, der die Ventilöffnung 12, 13 beispielsweise eines Ein- oder Auslasskanals umgrenzt, steht hier über die durch die äußeren Randhalterungen 101 der Ventilplatte 10 gebildete Ebene vor. Die Verbindungsbügel 5 stehen über ihre zugeordnete Haltebasis 7 beidseits seitlich derart vor, dass die mit den Verbindungsbügeln 5 verbundenen Stege 2 durch Biegung nach außen vorgespannt sind. Dabei ist jeder Verbindungsbügel 5 derart ausgestaltet, dass die vorspannungsbedingte Deformation der randseitigen Halterungen 101 im Bereich ihrer Verbindungsbügel 5 größer ist als im Bereich der Stege 2. In Figur 1 ist erkennbar, dass die randseitigen Halterungen 101 derart ausgestaltet sind, dass die Verlängerung des Abstands zwischen den auf gegenüberliegenden Seiten der Ventilplatte 10 angeordneten Ausformungen in Offenstellung (Linie b) des Ventils im Vergleich zur Schließstellung (Linie a) mehr als die Hälfte durch eine zusätzliche Biegung der Verbindungsbügel 5 kompensiert ist. Dabei weist jede Haltebasis 7 gegenüber der angrenzenden Ebene des Ventilgehäuses eine Höhe auf, die größer als die Dicke der Ventilplatte 10 ist. Aus den Figuren 2 und 3 wird deutlich, dass der Ventilsitz 4 über die angrenzende Ebene des Ventilgehäuses vorsteht, und dass auf der der dem Ventilsitz 4 abgewandten Seite des Ventilgehäuses wenigstens ein Hubfänger 102 vorgesehen ist, der über die angrenzende Ebene des Ventilgehäuses vorsteht und die maximale Auslenkung des Schließkörpers 1 in Offenstellung des Ventils 100 begrenzt.

Da die Ventilplatte 10 keine zusätzliche Funktion hinsichtlich einer Abdichtung der Trennebene zwischen den aneinander anliegenden Ventilgehäuseteilen 8, 15 zu übernehmen hat, kann die Ventilplatte 10 außenumfangsseitig zumindest im Bereich der Verbindungsbügel 5 und insbesondere allseits über den gesamten Außenumfang vom Ventilgehäuse beabstandet sein. Zwischen den das Ventilgehäuse umgrenzenden Ventilgehäuseteilen 8, 15 ist wenigstens eine, mit Abstand um die Ventilplatte 10 umlaufende und von der Ventilplatte 10 insbesondere separate Ringdichtung 11 vorgesehen.

Die Ventilplatte 10 des Ventils 100 wird an den äußeren Randhalterungen 101 randseitig gehalten und elastisch vorgespannt. Das Ventil, das wegen seiner Verbindungsbügel 5 auch als Bügelventil bezeichnet werden kann, wird passiv durch die Druckdifferenz betätigt. Wie Figur 1 zeigt, sind die zwei gegenüberliegenden Paare von Stegen 2, welche die Ventilplatte 10 mit ihren äußeren Randhalterungen 101 an den Haltebasen 7 anbinden, auf der Seite der Einspannung der Haltebasen 7 mindestens paarweise verbunden und durch Biegung der Verbindungsbügel 5 stehen die Steg-Paare der Randhalterungen 101 stets unter Zugspannung. An der der zugeordneten Haltebasis 7 zugewandten Umfangsseite der Verbindungsbügel 5 ist eine Zentriergeometrie vorgesehen, die mit einer entsprechenden Negativform an der dem Verbindungsbügel 5 benachbarten Seite der Haltebasis 7 vorhanden ist, und den Schließkörper 1 über dem Ventilsitz 4 positioniert.

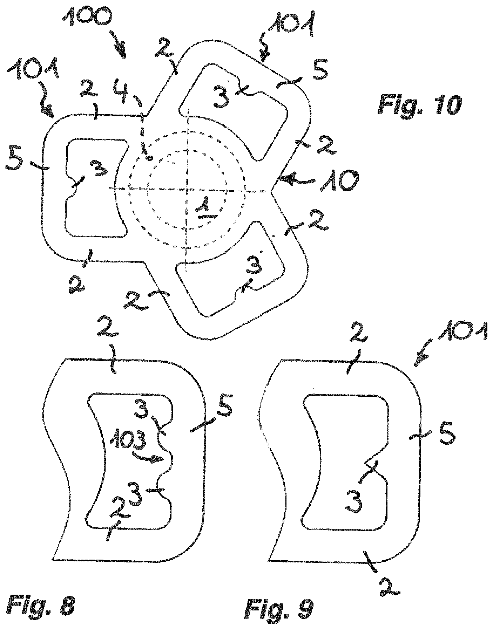

In dem in Figur 1 gezeigten Ausführungsbeispiel ist die an den Verbindungsbügeln 5 vorgesehene Zentriergeometrie durch eine etwa mittig angeordnete und nockenförmig ausgestaltete Ausformung 3 gebildet. Wie Figur 8 zeigt, kann der Verbindungsbügel 5 auf seiner Bügel-Innenseite aber auch zwei solcher Ausformungen 3 aufweisen, die über eine dazwischenliegende und etwa mittig angeordnete Einformung 103 miteinander verbunden sind.

In Figur 9 ist dargestellt, dass die an der Innenseite des Verbindungsbügels 5 vorgesehene und hier ebenfalls etwa mittig angeordnete Ausformung auch pfeilspitzenförmig ausgebildet sein kann, wobei auch diese pfeilspitzenförmige Ausformung 3 des in Figur 9 dargestellten Verbindungsbügels 5 in eine entsprechende Negativform an einer hier nicht weiter dargestellten Haltebasis eingreift.

Aus einem Vergleich der Figuren 2 und 4 beziehungsweise 3 und 5 wird deutlich, dass die Ventilplatte 10 bei der Montage des Ventils 100 auf eine der Ventilgehäuseteile und hier auf das jeweils untere Ventilgehäuseteil 15 gelegt wird. Die Vorspannung der Stege 2 sowohl in Längsrichtung Pf1 sowie auch in der Ebene des Ventilsitzes 4 wird durch das Ineinanderfügen der in montiertem Zustand aneinander anliegenden Ventilgehäuseteile 8, 15 erreicht. Die Aufnahmegeometrie der in montiertem Zustand aneinander anliegenden Ventilgehäuseteile 8, 15 kann durch entsprechende Einführschrägen 6 so gestaltet werden, dass die Vorspannung der Ventilplatte 10 beim manuellen oder gegebenenfalls auch automatisierten Ineinanderfügen dieser Gehäuseteile 8, 15 erzielt wird, ohne dass ein zusätzlicher Montageschritt notwendig ist. Dies erleichtert auch eine automatisierte Montage des Ventils 100, ohne auf die funktionell wichtige Vorspannung im Bereich der äußeren Randhalterungen 101 verzichten zu müssen.

Die Aufnahmegeometrie in den Ventilgehäuseteilen 8, 15 für die Ventilplatte 10 kann je nach Anforderung in dem hier untenliegenden Ventilgehäuseteil 15 oder dem obenliegenden Ventilgehäuseteil 8 angeordnet sein. Für eine vereinfachte Montage ist es jedoch sinnvoll, wenn die Aufnahme-Geometrien sowohl für das in Figur 2 und 4 gezeigte Einlassventil als auch für das in den Figuren 3 und 5 abgebildete Auslassventil in dem untenliegenden Ventilgehäuseteil 15 vorgesehen sind.

Durch die an den Verbindungsbügeln 5 vorgesehene Zentriergeometrie, die hier die Ausformungen 3 aufweist, wird die Ventilplatte 10 mit ihrem Schließkörper 1 gut über den Ventilsitz 4 positioniert. Diese Positionierung und damit auch die Ventilfunktion geht auch bei einer leichten Quellung des für die Ventilplatte 10 verwendeten Materials nicht verloren. Die Quellung reduziert nur die in Pfeilrichtung Pf1 wirksame elastische Vorspannung der Ventilplatte 10 im Bereich ihrer äußeren Randhalterungen 101.

Damit der Schließkörper 1 in Schließstellung des Ventils 100 dicht am Ventilsitz 4 anliegt, steht der Ventilsitz 4 leicht über die Ebene der randseitigen Halterungen 101 der Ventilplatte 10 vor. Das genaue Maß dieses Überstandes unterliegt den Bauteil-Toleranzen. Bei dem hier dargestellten erfindungsgemäßen Ventil 100 ist die Schließfunktion des Ventils 100 weniger stark vom genauen Maß des Überstandes des Ventilsitzes 4 abhängig, als dies bei anderen vorbekannten Ventilformen der Fall ist. Dies wird durch die Anbindung der Ventilplatte 10 am Ventilgehäuse durch die zumindest zwei Stege 2 einer jeden Randhalterung 101 erreicht, was zu einer weniger starken Biegung der Ventilplatte 10 führt.

Im Vergleich zu anderen, in der Länge vorgespannten Plattenventilen lässt sich bei dem hier dargestellten Ventil 100 auch eine automatisierte Montage einfacher realisieren. Die Verbindung von jeweils mindestens zwei Stegen 2 an den randseitigen Halterungen 101 erleichtert es für einen Greifer, die Ventilplatte 10 zu fassen und insbesondere elastisch vorzuspannen. Die automatisierte Montage des hier dargestellten Ventils 100 kann durch eine Bauteil-Konstruktion noch weiter vereinfacht werden. Wie nämlich die Figuren 4 und 5 zeigen, wird die Ventilplatte 10 dazu auf das untenliegende Gehäuseteil 15 gelegt und die Vorspannung der äußeren Randhalterungen 101 im Bereich der Stege 2 beziehungsweise der Verbindungsbügel 5 sowohl in Längsrichtung Pf1 wie auch in der Ebene des Ventilsitzes 4 wird durch das Ineinanderfügen und den Zusammenbau der beiden Ventilgehäuseteile 8, 15 in Montagerichtung Pf2 erreicht. Dabei wird die Vorspannung der Ventilplatte 10 im Bereich der Randhalterungen 101 durch die Formschrägen 6 realisiert.

Im Vergleich zu vorbekannten Ventilausführungen, bei denen in die Ventilplatte 10 auch die außenumfangsseitig angeordnete Ringdichtung integriert ist, braucht das hier dargestellte Bügelventil weniger Platz. Dies führt zu einem kleineren Schadraum (Totraum), wenn das Ventil 100 beispielsweise als Einlass- und/oder Auslassventil einer hier nicht weiter gezeigten Membranpumpe verwendet wird.

Aus einer zusammenschauenden Betrachtung der Figuren 2 bis 5 wird deutlich, dass das untenliegende Ventilgehäuseteil 15 jeweils dasjenige ist, welches die Haltebasen 7 für die randseitige Halterung der Ventilplatte 10 aufweist. In den Figuren 2 und 3 entspricht die gestrichelte Linie c der Neutrallinie des Ventils 100 in Schließstellung, während die Linie d jene des Ventils 100 in Offenstellung entspricht. Die Stege 2 und der Verbindungsbügel 10 einer jeden Randhalterung sind derart gestaltet, dass bei geöffnetem Ventil die Verlängerung der in Figur 1 gezeigten Linie b gegenüber der dort abgebildeten Line a in geschlossenem Zustand größtenteils, zumindest aber mehr als die Hälfte, in den Verbindungsbügeln 5 durch zusätzliche Biegung kompensiert wird, und weniger in den Stegen durch Zugdehnung.

In Figur 10 ist die Ventilplatte 10 eines ansonsten nicht weiter gezeigten Ventils dargestellt, wobei an der Ventilplatte 10 gemäß Figur 10 drei außenliegende Randhalterungen 101 vorgesehen sind, die in gleichmäßigen Abständen über den Umfang der Ventilplatte 10 angeordnet sind. Jede der randseitigen Halterungen weist einen Verbindungsbügel 5 auf, der jeweils über ein Paar von Stegen 2 mit dem zentralen und auch hier kreisrund ausgebildeten Schließkörper 1 der Ventilplatte 10 verbunden ist. Jede der aus einem Paar von Stegen 2 und einem Verbindungsbügel 5 gebildeten Randhalterungen hintergreift - wie in Figur 1 gezeigt - eine entsprechende Haltebasis 7 am Ventilgehäuse.

### Bezugszeichenliste

- 1: Schließkörper
- 2: Steg
- 3: Ausformung (am Verbindungsbügel)
- 4: Ventilsitz
- 5: Verbindungsbügel
- 6: Formschrägen
- 7: Haltebasis
- 8: obenliegendes Ventilgehäuseteil
- 9: Anbindungsbereich zwischen den Stegen 2 und dem Schließkörper 1
- 10: Ventilplatte
- 11: Ringdichtung
- 12: Einlassöffnung
- 13: Auslassöffnung
- 14: Ventilraum
- 15: untenliegendes Ventilgehäuseteil
- 100: Ventil
- 101: äußere Randhalterung
- 102: Hubfänger
- 103: Einformung
- Pf1: Kraftrichtung der Vorspannung/Zugkräfte
- Pf2: Kraftrichtung beim Zusammenfügen der Ventilgehäuseteile 8, 15
- a: Abstand der auf gegenüberliegenden Seiten des Ventils 100 angeordneten Ausformungen 3 in geschlossenen Zustand
- b: Abstand der auf gegenüberliegenden Seiten der Ventilplatte 10 angeordneten Ausformungen 3 in Offenstellung des Ventils 100
- c: Neutrallinie des Ventils in Schließstellung
- d: Neutrallinie des Ventils in Offenstellung

## Patentansprüche

1. Ventil (100), insbesondere Platten- oder Rückschlagventil, für Membranpumpen, mit einem, von einem Ventilgehäuse umgrenzten Ventilraum (14), in dem wenigstens ein Ventilsitz (4) vorgesehen ist, der mit einer Ventilplatte (10) zusammenwirkt, die über äußere Randhalterungen (101) elastisch auf Zug vorgespannt ist, derart, dass ein Schließkörper (1) der Ventilplatte (10) von einer Schließstellung, in welcher der Schließkörper (1) dicht auf dem Ventilsitz (4) aufliegt, gegen die Elastizität der Ventilplatte (10) zumindest im Bereich ihrer äußeren Randhalterungen (101) in eine Offenstellung bewegbar ist, wobei die äußeren Randhalterungen (101) der Ventilplatte (10) Stege (2) aufweisen und wobei die äußeren Randhalterungen (101) Verbindungsbügel (5) haben, die mit den dem Schließkörper (1) abgewandten Stegenden der Stege (2) verbunden sind,
wobei jede äußere Randhalterung (101) zumindest zwei Stege (2) aufweist,
wobei die Stege (2) einer jeden äußeren Randhalterung (101) über einen Verbindungsbügel (5) miteinander verbunden sind,
**dadurch gekennzeichnet, dass** die
äußeren Randhalterungen (101) untereinander unverbunden nur an dem Schließkörper (1) angreifen, dass jeder der Verbindungsbügel (5) wenigstens eine zugeordnete Haltebasis (7) des Ventilgehäuses hintergreift und dass die Verbindungsbügel (5) über ihre zugeordnete Haltebasis (7) beidseits seitlich vorstehen, derart, dass die Verbindungsbügel (5) durch Biegung nach außen vorgespannt sind.

2. Ventil nach Anspruch 1, **dadurch gekennzeichnet, dass** die Verbindungsbügel (5) getrennt voneinander über die ihnen jeweils zugeordneten Stege (2) mit dem Schließkörper (1) verbunden sind.

3. Ventil nach Anspruch 1 oder 2, **dadurch gekennzeichnet, dass** jede Randhalterung (101) eine Zentriergeometrie aufweist, die mit einer vorzugsweise komplementären Gegengeometrie der wenigstens einen zugeordneten Haltebasis (7) zusammenwirkt, und/oder dass jede Randhalterung (101) ein Paar von Stegen (2) aufweist, die (2) an ihren dem Schließkörper (1) abgewandten Enden über einen gemeinsamen Verbindungsbügel (5) miteinander verbunden sind

4. Ventil nach einem der Ansprüche 1 bis 3, **dadurch gekennzeichnet, dass** der Verbindungsbügel (5) einer jeden Randhalterung (101) mindestens eine zentrierende oder positionierende Aus- oder Einformung (3; 103) aufweist, die mit einer komplementären Gegenprofilierung an der wenigstens einen zugeordneten Haltebasis (7) zusammenwirkt, und/oder dass der Verbindungsbügel (5) einer jeden Randhalterung (101) eine etwa mittig angeordnete und vorzugsweise nockenförmig ausgebildete Ausformung (3) hat.

5. Ventil nach einem der Ansprüche 1 bis 4, **dadurch gekennzeichnet, dass** die Stege (2) der äußeren Randhalterungen (101) auf gegenüberliegenden Seiten des Ventilsitzes (4) an der Ventilplatte (10) vorgesehen sind und/oder dass die Stege (2) der auf gegenüberliegenden Seiten der Ventilplatte (10) angeordneten Randhalterungen (101) paarweise in etwa einer Linie angeordnet sind, die vorzugsweise etwa tangential zum Schließkörper (1) verläuft.

6. Ventil nach einem der Ansprüche 1 bis 5, **dadurch gekennzeichnet, dass** zumindest eine Haltebasis (7) in ihrem vom zugeordneten Verbindungsbügel (5) beaufschlagten Umfangsbereich insbesondere konvex gebogen oder gerundet ausgebildet ist.

7. Ventil nach einem der Ansprüche 1 bis 6, **dadurch gekennzeichnet, dass** der Ventilraum (14) im Ventilgehäuse zwischen aneinander anliegenden Ventilgehäuseteilen (8, 15) umgrenzt ist und insbesondere, dass die zur Aufnahme der Ventilplatte (10) vorgesehene Aufnahmegeometrie der aneinander anliegenden Ventilgehäuseteile (8, 15) Einführschrägen (6) aufweist, die beim Einfügen der Gehäuseteile (8, 15) aneinander die Ventilplatte (10) in eine an ihren Randhalterungen (101) vorgespannte Gebrauchsstellung durch die Ventilgehäuseteilen (8, 15) bringt.

8. Ventil nach einem der Ansprüche 1 bis 7, **dadurch gekennzeichnet, dass** der Ventilsitz (4) über die durch die randseitigen Halterungen (101) der Ventilplatte (10) gebildete Ebene vorsteht.

9. Ventil nach einem der Ansprüche 1 bis 8, **dadurch gekennzeichnet, dass** jeder Verbindungsbügel (5) derart ausgestaltet ist, dass die vorspannungsbedingte Deformation der randseitigen Halterungen (101) im Bereich ihrer Verbindungsbügel (5) größer ist als im Bereich der Stege (2).

10. Ventil nach einem der Ansprüche 1 bis 9, **dadurch gekennzeichnet, dass** die randseitigen Halterungen (101) derart ausgestaltet sind, dass die Verlängerung des Abstands zwischen den auf gegenüberliegenden Seiten der Ventilplatte (10) angeordneten Ausformungen (3) in Offenstellung des Ventils (100) im Vergleich zur Schließstellung mehr als die Hälfte durch eine zusätzliche Biegung der Verbindungsbügel (5) kompensiert ist.

11. Ventil nach einem der Ansprüche 1 bis 10, **dadurch gekennzeichnet, dass** jede Haltebasis (7) gegenüber der angrenzenden Ebene des Ventilgehäuses eine Höhe aufweist, die größer als die Dicke der Ventilplatte (10) ist.

12. Ventil nach einem der Ansprüche 1 bis 11, **dadurch gekennzeichnet, dass** die Ventilplatte (10) zwischen den beidseits des Ventilsitzes (4) angeordneten Haltebasen derart mit Vorspannung gehalten ist, dass auf die Stege (2) der randseitigen Halterungen (101) selbst bei einer Quellung des für die Ventilplatte (10) verwendeten Materials eine Zugspannung einwirkt.

13. Ventil nach einem der Ansprüche 1 bis 12, **dadurch gekennzeichnet, dass** der Ventilsitz (4) über die angrenzende Ebene des Ventilgehäuses vorsteht und/oder dass auf der dem Ventilsitz (4) abgewandten Seite des Ventilgehäuses wenigstens ein Hubfänger (102) vorgesehen ist, dass der Hubfänger (102) über die angrenzende Ebene des Ventilgehäuses vorsteht und die maximale Auslenkung des Schließkörpers (1) in Offenstellung des Ventils (100) begrenzt.

14. Ventil nach einem der Ansprüche 1 bis 13, **dadurch gekennzeichnet, dass** die Stege (2) im Bereich zwischen dem Verbindungsbügel (5) einerseits und ihrer Anbindung an den Schließkörper (1) andererseits einen gleichbleibenden Querschnitt aufweisen oder dass die Stege im Bereich ihrer Anbindung an den Schließkörper (1) eine Querschnittsschwächung oder -verengung haben.

15. Ventil nach einem der Ansprüche 1 bis 14, **dadurch gekennzeichnet, dass** die Ventilplatte (10) außenumfangsseitig zumindest im Bereich der Verbindungsbügel (5) und insbesondere allseits über den gesamten Außenumfang vom Ventilgehäuse beabstandet ist und/oder dass zwischen den das Ventilgehäuse umgrenzenden Ventilgehäuseteilen (8, 15) wenigstens eine mit Abstand um die Ventilplatte (10) umlaufende und von der Ventilplatte (10) insbesondere separate Ringdichtung (11) vorgesehen ist.

16. Membranpumpe mit wenigstens einem Einlass- und mindestens einem Auslassventil, **dadurch gekennzeichnet, dass** zumindest ein Einlass- und/oder Auslassventil gemäß einem der Ansprüche 1 bis 15 ausgebildet ist.

## Claims

1. Valve (100), in particular a plate or check valve, for diaphragm pumps, comprising a valve chamber (14) which is delimited by a valve housing and in which at least one valve seat (4) is provided which cooperates with a valve plate (10), which valve plate (10) is elastically preloaded for tension via outer edge mountings (101) such that a closing body (1) of the valve plate (10) can be moved from a closed position, in which the closing body (1) lies tightly on the valve seat (4), into an open position against the elasticity of the valve plate (10) at least in the region of its outer edge mountings (101), wherein the outer edge mountings (101) of the valve plate (10) have webs (2), and wherein the outer edge mountings (101) have connecting brackets (5) which are connected to those ends of the webs (2) facing away from the closing body (1), wherein each outer edge mounting (101) has at least two webs (2), wherein the webs (2) of each outer edge mounting (101) are connected to one another via a connecting bracket (5), **characterized in that** the outer edge mountings (101) are disconnected from one another and engage only on the closing body (1), **in that** each of the connecting brackets (5) engages behind at least one assigned holding base (7) of the valve housing, and **in that** the connecting brackets (5) protrude laterally on both sides beyond their assigned holding base (7) such that the connecting brackets (5) are preloaded towards the outside by bending.

2. Valve according to Claim 1, **characterized in that** the connecting brackets (5) are separate from one another and connected to the closing body (1) via their respectively assigned webs (2).

3. Valve according to Claim 1 or 2, **characterized in that** each edge mounting (101) has a centring geometry which cooperates with a preferably complementary counter-geometry of the at least one assigned holding base (7), and/or **in that** each edge mounting (101) has a pair of webs (2) which, at their ends facing away from the closing body (1), are connected to one another via a common connecting bracket (5).

4. Valve according to one of Claims 1 to 3, **characterized in that** the connecting bracket (5) of each edge mounting (101) has at least one centring or positioning protrusion or recess (3; 103) which cooperates with a complementary counter-profiling on the at least one assigned holding base (7), and/or **in that** the connecting bracket (5) of each edge mounting (101) has an approximately centrally arranged and preferably cam-shaped protrusion (3).

5. Valve according to one of Claims 1 to 4, **characterized in that** the webs (2) of the outer edge mountings (101) are provided on opposite sides of the valve seat (4) on the valve plate (10), and/or in that the webs (2) of the edge mountings (101) arranged on opposite sides of the valve plate (10) are arranged in pairs approximately in a line which runs preferably approximately tangentially to the closing body (1).

6. Valve according to one of Claims 1 to 5, **characterized in that**, in its peripheral region affected by the assigned connecting bracket (5), at least one holding base (7) is in particular convexly curved or rounded.

7. Valve according to one of Claims 1 to 6, **characterized in that** the valve chamber (14) in the valve housing is delimited between adjoining valve housing parts (8, 15), and in particular **in that** the receiving geometry, provided for receiving the valve plate (10), of the adjoining valve housing parts (8, 15) has inlet chamfers (6) which, on joining of the housing parts (8, 15), bring the valve plate (10) into a usage position preloaded at its edge mountings (101) by the valve housing parts (8, 15).

8. Valve according to one of Claims 1 to 7, **characterized in that** the valve seat (4) protrudes beyond the plane formed by the edge-side mountings (101) of the valve plate (10).

9. Valve according to one of Claims 1 to 8, **characterized in that** each connecting bracket (5) is configured such that the preload-induced deformation of the edge-side mountings (101) is greater in the region of their connecting brackets (5) than in the region of the webs (2).

10. Valve according to one of Claims 1 to 9, **characterized in that** the edge-side mountings (101) are configured such that the extension of the distance between the protrusions (3) arranged on opposite sides of the valve plate (10), in the open position of the valve (100) compared with the closed position, is more than half compensated by an additional bending of the connecting brackets (5).

11. Valve according to one of Claims 1 to 10, **characterized in that** each holding base (7) has a height, relative to the adjacent plane of the valve housing, which is greater than the thickness of the valve plate (10).

12. Valve according to one of Claims 1 to 11, **characterized in that** the valve plate (10) is held with a preload between the holding bases arranged on both sides of the valve seat (4), such that a tensile stress acts on the webs (2) of the edge-side mountings (101) even upon swelling of the material used for the valve plate (10).

13. Valve according to one of Claims 1 to 12, **characterized in that** the valve seat (4) protrudes beyond the adjacent plane of the valve housing, and/or **in that**, on the side of the valve housing facing away from the valve seat (4), at least one lift stop (102) is provided, and **in that** the lift stop (102) protrudes beyond the adjacent plane of the valve housing and limits the maximum deflection of the closing body (1) in the opening position of the valve (100).

14. Valve according to one of Claims 1 to 13, **characterized in that** the webs (2) have a constant cross section in the region between the connecting bracket (5) on one side and their connection to the closing body (1) on the other, or **in that** the webs have a cross-sectional thinning or constriction in the region of their connection to the closing body (1) .

15. Valve according to one of Claims 1 to 14, **characterized in that**, on the outer circumferential side, the valve plate (10) is spaced apart from the valve housing at least in the region of the connecting brackets (5) and in particular on all sides over the entire outer circumference, and/or in that, between the valve housing parts (8, 15) delimiting the valve housing, at least one ring seal (11) is provided which runs with a spacing around the valve plate (10) and is in particular separate from the valve plate (10).

16. Diaphragm pump having at least one inlet valve and at least one outlet valve, **characterized in that** at least one inlet valve and/or outlet valve is configured according to one of Claims 1 to 15.

## Revendications

1. Soupape (100), en particulier soupape à plaque ou anti-retour, pour pompes à membrane, avec une chambre de soupape (14) circonscrite par un boîtier de soupape dans laquelle est prévu au moins un siège de soupape (4) qui interagit avec une plaque de soupape (10) qui est précontrainte élastiquement en traction par des fixations de bord extérieures (101) de telle sorte qu'un élément de fermeture (1) de la plaque de soupape (10) peut passer, en s'opposant à l'élasticité de la plaque de soupape (10) au moins dans la région de ses fixations périphériques extérieures (101), d'une position de fermeture dans laquelle cet élément de fermeture (1) s'applique de façon étanche sur le siège de soupape (4) à une position ouverte, lesquelles fixations de bord extérieures (101) de la plaque de soupape (10) présentent des branches (2) et lesquelles fixations de bord extérieures (101) ont des étriers de liaison (5) qui sont reliés aux extrémités de branche des branches (2) opposées à l'élément de fermeture (1), chaque fixation de bord extérieure (101) comportant au moins deux branches (2), les branches (2) de chaque fixation de bord extérieure (101) étant reliées entre elle par un étrier de liaison (5), **caractérisée en ce que** les fixations de bord extérieures (101) non reliées entre elles entrent en prise uniquement avec l'élément de fermeture (1), que chacun des étriers de liaison (5) entre en prise par derrière avec au moins un socle de retenue (7) associé du boîtier de soupape et que les étriers de liaison (5) font saillie latéralement de part et d'autre au-delà de leur socle de retenue (7) associé de telle sorte que les étriers de liaison (5) sont précontraints vers l'extérieur par flexion.

2. Soupape selon la revendication 1, **caractérisée en ce que** les étriers de liaison (5) sont reliés séparément l'un de l'autre à l'élément de fermeture (1) par les branches qui leurs sont associées respectivement.

3. Soupape selon la revendication 1 ou 2, **caractérisée en ce que** chaque fixation de bord extérieure (101) présente une géométrie de centrage qui interagit avec une géométrie homologue de préférence complémentaire d'un socle de retenue (7) associé, et/ou que chaque fixation de bord extérieure (101) présente une paire de branches (2) qui sont reliées entre elles par un étrier de liaison (5) commun au niveau de leurs extrémités opposées à l'élément de fermeture (1).

4. Soupape selon une des revendications 1 à 3, **caractérisée en ce que** l'étrier de liaison (5) de chaque fixation de bord (101) présente au moins une protubérance ou une encoche (3 ; 103) de centrage ou de positionnement qui interagit avec un profilage homologue complémentaire sur l'au moins un socle de retenue (7) associé et/ou que l'étrier de liaison (5) de chaque fixation de bord (101) a une protubérance (3) disposée approximativement au centre et de préférence configurée en forme de came.

5. Soupape selon une des revendications 1 à 4, **caractérisée en ce que** les branches (2) des fixations de bord extérieures (101) sont prévues sur des côtés opposés du siège de soupape (4) au niveau de la plaque de soupape (10) et/ou que les branches (2) des fixations de bord (101) disposées sur des côtés opposés de la plaque de soupape (4) sont disposées par paire approximativement sur une ligne qui court de préférence de manière approximativement tangentielle à l'élément de fermeture (1).

6. Soupape selon une des revendications 1 à 5, **caractérisée en ce qu'**au moins un socle de retenue (7) est courbé ou arrondi en particulier de façon convexe dans sa zone périphérique en contact avec l'étrier de liaison (5).

7. Soupape selon une des revendications 1 à 6, **caractérisée en ce que** la chambre de soupape(14) est circonscrite dans le boîtier de soupape entre des parties de boîtier de soupape (8, 15) adjacentes et en particulier que la géométrie de réception des parties de boîtier de soupape (8, 15) adjacentes prévues pour recevoir la plaque de soupape (10) présente des pentes d'introduction (6) qui, lors de l'insertion des parties de boîtier (8, 15) l'une contre l'autre, met la plaque de soupape (10) dans une position d'utilisation précontrainte contre ses fixations de bord (101) par les parties de boîtier de soupape (8, 15).

8. Soupape selon une des revendications 1 à 7, **caractérisée en ce que** le siège de soupape (4) fait saillie au-delà du plan formé par les fixations de bord (101) de la plaque de soupape (10).

9. Soupape selon une des revendications 1 à 8, **caractérisée en ce que** chaque étrier de liaison (5) est configuré de telle sorte que la déformation due à la précontrainte des fixations de bord (101) est plus importante dans la région de leur étrier de liaison (5) que dans la région des branches (2).

10. Soupape selon une des revendications 1 à 9, **caractérisée en ce que** les fixations de bord (101) sont configurées de telle sorte que l'allongement de la distance entre les protubérances (3) disposées sur des côtés opposés de la plaque de soupape (10) dans la position d'ouverture de la soupape (100) par rapport à la position de fermeture est compensé plus qu'à moitié par la courbure supplémentaire des étriers de liaison (5).

11. Soupape selon une des revendications 1 à 10, **caractérisée en ce que** chaque socle de retenue (7) présente une hauteur par rapport au plan adjacent du boîtier de soupape qui est supérieure à l'épaisseur de la plaque de soupape (10).

12. Soupape selon une des revendications 1 à 11, **caractérisée en ce que** la plaque de soupape (10) est maintenue sous précontrainte entre les socles de retenue disposés de part et d'autre du siège de soupape (4) de telle sorte qu'une contrainte de traction agit sur les branches (2) des fixations de bord (101) même en cas de gonflement du matériau utilisé pour la plaque de soupape (10).

13. Soupape selon une des revendications 1 à 12, **caractérisée en ce que** le siège de soupape (4) fait saillie au-delà du plan adjacent du boîtier de soupape et/ou qu'au moins un limiteur de course (102) est prévu sur le côté du boîtier de soupape opposé au siège de soupape, lequel limiteur de course (102) fait saillie au-delà du plan adjacent du boîtier de soupape et limite l'extension maximale de l'élément de fermeture (1) dans la position d'ouverture de la soupape (100).

14. Soupape selon une des revendications 1 à 13, **caractérisée en ce que** les branches (2) présentent une section transversale constante dans la région située entre l'étrier de liaison (5), d'une part, et leur raccordement à l'élément de fermeture (1), d'autre part, ou que les branches ont un affaiblissement ou un rétrécissement de section transversale dans la région de leur raccordement à l'élément de fermeture (1).

15. Soupape selon une des revendications 1 à 14, **caractérisée en ce que** la plaque de soupape (10) est espacée du boîtier de soupape au niveau de la périphérie extérieure au moins dans la région des étriers de liaison (5) et en particulier de tous les côtés sur toute la périphérie extérieure et/ou qu'entre les parties de boîtier de soupape (8, 15) circonscrivant le boîtier de soupape, il est prévu au moins un joint annulaire (11) entourant à distance la plaque de soupape (10) et en particulier séparé de la plaque de soupape (10).

16. Pompe à membrane avec au moins une soupape d'admission et au moins une soupape d'évacuation, **caractérisée en ce qu**'au moins une soupape d'admission et/ou d'évacuation est configurée selon une des revendications 1 à 15.
